# EUROPÄISCHE PATENTSCHRIFT

(11) **EP 1 381 831 B1**
(45) Veröffentlichungstag und Bekanntmachung des Hinweises auf die Patenterteilung: **24.02.2016**
(21) Anmeldenummer: 02732660.2
(22) Anmeldetag: 24.04.2002
(51) Int. Cl.: G01F 1/84

(54) **DURCHFLUSS-MESSWERTAUFNEHMER VOM VIBRATIONSTYP**
VIBRATION-TYPE FLOW SENSOR
CAPTEUR DE DÉBIT DU TYPE VIBRANT

(30) Priorität: 26.04.2001 EP 01110378
(43) Veröffentlichungstag der Anmeldung: 21.01.2004
(73) Patentinhaber: Endress + Hauser Flowtec AG, 4153 Reinach BL 1 (CH)
(72) Erfinder: SCHÜTZE, Christian, CH-4054 Basel (CH); BITTO, Ennio, CH-4147 Aesch (CH)
(74) Vertreter: Andres, Angelika Maria
(86) Internationale Anmeldenummer: PCT/EP2002/004500
(87) Internationale Veröffentlichungsnummer: WO 2002/088641

(56) Entgegenhaltungen:
- EP-A- 0 685 712
- EP-A- 0 803 713
- US-A- 4 756 198
- US-A- 5 048 350
- US-A- 5 349 872
- US-A- 5 796 011

## Beschreibung

Die Erfindung betrifft eine Magnetkreisanordnung, die für eine Verwendung in einem Meßwertaufnehmer vom Vibration-Typ, insb. einem Coriolis-Massedurchflußaufnehmer, geeignet ist.

Zur Ermittlung eines Massedurchflusses eines in einer Rohrleitung strömenden Fluids, insb. einer Flüssigkeit, werden oftmals Coriolis-Massedurchflußmesser verwendet, die bekanntlich mittels eines entsprechenden Meßwertaufnehmers vom Vibrations-Typ, angetrieben von einer daran angeschlossenen Steuer- und Auswerteelektronik, im Fluid Corioliskräfte bewirken und von diesen abgeleitet ein den Massedurchfluß repräsentierendes Meßsignal erzeugen.

Solche Coriolis-Massedurchflußmesser sind seit langem bekannt und im industriellen Einsatz. So sind z.B. in der US-A 47 56 198, der US-A 48 01 897, der US-A 50 48 350, der US-A 53 01 557, der US-A 53 49 872, der US-A 53 94 758, der US-A 57 96 011, der US-A 61 38 517 oder der EP-A 803 713 Coriolis-Massedurchflußmesser mit jeweils einem Meßwertaufnehmer beschrieben, der umfaßt:
- eine mit der Rohrleitung kommunizierende Doppelrohranordnung mit
   -- einem im Betrieb vibrierenden ersten Aufnehmerrohr und
   -- einem im Betrieb vibrierenden zweiten Aufnehmerrohr,
   -- wobei das vibrierende erste und das vibrierende zweite Aufnehmerrohr gegenphasig zueinander schwingen,

- einen Schwingungserreger zum Antreiben der Aufnehmerrohre sowie
- Schwingungssensoren zum Erfassen einlaßseitiger und auslaßseitiger Schwingungen der Aufnehmerrohre und zum Erzeugen wenigstens eines vom Massedurchfluß beeinflußten elektrischen Sensorsignals,
- wobei der Schwingungserreger und/oder die Schwingungssensoren wenigstens eine Magnetkreisanordnung zum Wandeln elektrischer in mechanische Energie und/oder umgekehrt aufweisen, welche wenigstens eine Magnetkreisanordnung ferner umfaßt:
   - wenigstens eine zumindest zeitweise von einem Strom durchflossene und zumindest zeitweise von einem Magnetfeld durchsetzte Spule,
   - einen am ersten vibrierenden Aufnehmerrohr des Meßwertaufnehmers fixierten ersten Anker und
   - einen am zweiten vibrierenden Aufnehmerrohr des Meßwertaufnehmers fixierten zweiten Anker sowie
   - eine Halterung für die Spule.

Gebogene oder gerade Aufnehmerrohre solcher Meßwertaufnehmer können bekanntlich, im sogenannten Nutzmode zu Biegeschwingungen gemäß einer ersten Eigenschwingungsform angeregt, im hindurchströmenden Fluid Corioliskräfte bewirken. Diese wiederum führen dann dazu, daß den angeregten Biegeschwingungen des Nutzmodes Biegeschwingungen im sogenannten Coriolismode koplanar überlagert werden und dementsprechend die mittels der Schwingungssensoren einlaßseitig und auslaßseitig erfaßten Schwingungen eine auch vom Massedurchfluß abhängige, meßbare Phasendifferenz aufweisen.

Üblicherweise werden die Aufnehmerrohre des Meßwertaufnehmers im Betrieb auf einer momentanen' Resonanzfrequenz der ersten Eigenschwingungsform, insb. bei konstantgeregelter Schwingungsamplitude, angeregt. Da diese Resonanzfrequenz insb. auch von der momentanen Dichte des Fluids abhängig ist, kann mittels marktüblicher Coriolis-Massedurchflußmesser neben dem Massedurchfluß auch die Dichte von strömenden Fluiden gemessen werden.

Bei Magnetkreisanordnungen gemäß der US-A 50 48 350 sind sowohl der Anker als auch die zugehörige Spule jeweils direkt an der Doppelrohranordnung fixiert, so daß beide im Betrieb, den Bewegungen der zugehörigen Aufnehmerrohre folgend, praktisch permanent beschleunigt werden. Die daraus resultierenden, nachteilig insb. auf die Spule wirkenden, Trägheitskräfte können dabei in Bereichen von weit über 10 G (= Gewicht) liegen. Selbst Trägheitskräfte von bis zu 30 G sind hierbei nicht ungewöhnlich. Aufgrund dieser hohen mechanischen Beanspruchungen müssen bei derartigen Magnetkreisanordnungen die Spulen, insb. auch deren Wicklungen, hoch belastbar sein, um eine möglichst hohe Lebensdauer der Schwingungserreger, insb. auch eine hohe Schwingspielzahl, bei gleichbleibender Funktionsgenauigkeit gewährleisten zu können.

Bei den Magnetkreisanordnungen z.B. gemäß der US-A 47 56 198, US-A 53 49 872 oder der US-A 61 38 517 wird demgegenüber eine solche mechanische Beanspruchung der Spulen dadurch vermieden, daß diese jeweils von einer betriebsgemäß relativ zu den vibrierenden Aufnehmerrohren ruhenden Haltekonstruktion, z.B. einer Trägerplatte, einem Meßgerätegehäuse oder einem direkt an den Aufnehmerrohren biegeelastisch befestigten Tragrähmchen, in einem nahezu konstanten Abstand zu einer Schwerelinie, hier jeweils einer imaginären Hochachse, der Doppelrohranordnung gehaltert sind.

Es hat sich jedoch gezeigt, daß so zwar die oben beschriebenen mechanischen Beanspruchungen praktisch völlig unterdrückt werden können, daß aber die Funktionsgenauigkeit einer solchen Magnetkreisanordnung durch, insb. temperaturbedingte, Verschiebungen zwischen Haltekonstruktion und Doppelrohranordnung, wie sie z.B. bei Anwendungen für Fluide mit in einem weiten Bereich schwankender Fluidtemperatur auftreten, empfindlich gestört sein kann. Aufgrund der dadurch auftretenden naturgemäß unterschiedlichen, nur begrenzt neutralisierbaren Ausdehnungen von Haltekonstruktion und Doppelrohranordnung verschieben sich nämlich die Ruhelagen von Anker und Spule relativ zueinander.

Während bei der Magnetkreisanordnung gemäß der US-A 61 38 517 vor allem ein sehr hoher Temperatur- und somit auch ein sehr hoher Ausdehnungsunterschied zwischen Haltekonstruktion und Doppelrohranordnung auftreten kann, können bei den in der US-A 53 49 872 beschriebenen Magnetkreisanordnungen, deren Magnetfeld, insb. auch im Bereich der Anker, in einem sehr hohen Maße inhomogen ist, bereits geringfügige Störungen zu erheblichen Ungenauigkeit führen. Dies wiederum kann z.B. bei einer Verwendung als Schwingungssensor dazu führen, das die Sensorsignale ein sehr schlechtes Signal-zu-Rausch-Verhältnis und/oder einen sehr hohen Klirrfaktor aufweisen. Des weiteren kann sich das Magnetfeld einer Magnetkreisanordnung gemäß der US-A 53 49 872 einen sehr weiten räumlichen Bereich, also auch benachbarte Komponenten des Meßwertaufnehmers, insb. auch andere derartige Magnetkreisanordnungen und/oder die Aufnehmerrohre mit dem hindurchströmenden Fluid, durchsetzen und so z.B. Störspannungen induzieren. Weitere Nachteile einer solchen Magnetkreisanordnung sind ausführlich z.B. auch in der US-A 61 38 517 erörtert worden.

Zur Gewährleistung einer trotz dieser temperaturbedingten Störeinflüsse auf vorgenannte Magnetkreisanordnungen hohen Funktionsgenauigkeit muß in entsprechender Weise der ohnehin bei solchen Massedurchflußmeßgeräten hohe technische Aufwand zur Kompensation temperaturabhängiger Störungen noch mehr erhöht werden.

Ein Aufgabe der Erfindung besteht daher darin, einen Meßwertaufnehmer vom Vibrations-Typ mit einer Magnetkreisanordnung anzugeben, die eine hohe Lebensdauer, insb. auch eine hohe Schwingspielzahl, und die, insb. auch bei einer Anwendung des Meßwertaufnehmers auf Fluide mit hoher und/oder schwankender Fluidtemperatur, eine möglichst gleichbleibende, hohe Funktionsgenauigkeit aufweist. Die Magnetkreisanordnung des erfindungsgemäßen Meßwertaufnehmer soll außerdem unempfindlich gegenüber äußeren Magnetfeldern sein.

Zur Lösung der Aufgabe besteht die Erfindung in einem Meßwertaufnehmer gemäß dem unabhängigen Anspruch 1 bzw. gemäß dem unabhängigen Anspruch 2. Weitere vorteilhafte Ausgestaltungen ergeben sich zudem aus den abhängigen Ansprüchen.

Nach einer bevorzugten ersten Ausgestaltung der Erfindung umfaßt die Magnetkreisanordnung eine im Betrieb von einem Strom durchflossene zweite Spule, wobei die zweite Spule und der zweite Anker über ein zweites Magnetfeld miteinander in Wechselwirkung stehen.

Nach einer bevorzugten zweiten Ausgestaltung der Erfindung ist wenigstens der erste Anker so geformt und so zur ersten Spule ausgerichtet, daß sich das erste Magnetfeld zumindest seitlich neben der Spule und, mit einer imaginären Spulenmittelachse im wesentlichen fluchtend, homogenisiert ausbreitet.

Nach einer bevorzugten dritten Ausgestaltung der Erfindung ist jeder der beiden Anker becherförmig ausgebildet.

Nach einer bevorzugten vierten Ausgestaltung der Erfindung ist die erste Spule auf einem ersten Spulenkern angeordnet und sind der erste Spulenkern und der erste Anker so geformt und zueinander ausgerichtet, daß ein zwischen den beiden gebildeter Luftspalt von einem Magnetfluß durchsetzt ist.

Nach einer bevorzugten fünften Ausgestaltung der Erfindung ist jeder der beiden Spulenkerne becherförmig ausgebildet.

Nach einer bevorzugten sechsten Ausgestaltung der Erfindung umfaßt die Halterung eine Tragplatte zum Haltern der wenigstens ersten Spule, wobei die Tragplatte mittels eines am ersten Aufnehmerrohr fixierten, federelastischen ersten Schenkels sowie mittels eines am zweiten Aufnehmerrohr fixierten, federelastischen zweiten Schenkels an einer mittels der beiden Aufnehmerrohre gebildeten Doppelrohranordnung schwimmend gehaltert ist.

Nach einer bevorzugten siebenten Ausgestaltung der Erfindung ist die Tragplatte, sich entlang der Doppelrohranordnung erstreckend, einlaßseitig und auslaßseitig jeweils am ersten und zweiten Aufnehmerrohr fixiert.

Nach einer bevorzugten achten Ausgestaltung der Erfindung ist der Meßwertaufnehmer ein Coriolis-Massedurchflußaufnehmer.

Nach einer bevorzugten neunten Ausgestaltung der Erfindung dient die Magnetkreisanordnung als ein die Aufnehmerrohre antreibender Schwingungserreger des Meßwertaufnehmers.

Nach einer bevorzugten zehnten Ausgestaltung der Erfindung dient die Magnetkreisanordnung als ein Schwingungen der Aufnehmerrohre erfassender Schwingungssensor des Meßwertaufnehmers.

Ein Grundgedanke der Erfindung besteht darin, einerseits wenigstens eine der bei derartigen Meßwertaufnehmern, insb. in Coriolis-Massedurchflußaufnehmern oder auch Coriolis-Massedurchfluß/Dichteaufnehmern, üblicherweise verwendeten Magnetkreisanordnungen, also den Schwingungserreger und/oder die Schwingungssensoren, so zu gestalten, daß deren Spulen auch im Betrieb zumindest bezüglich einer Schwerelinie der Doppelrohranordnung, insb. ihrer Hochachse, in einer relativen Ruhelage verharren. Andererseits zielt die Erfindung darauf ab, eine trotzdem gegenüber Temperatureinflüssen weitgehend unempfindliche Magnetkreisanordnung zu schaffen, bei der ein Übergreifen des eigenen Magnetfelds auf andere Komponenten des Meßwertaufnehmers unterdrückt werden kann und die auch selbst gegen andere Magnetfelder wirksam abgeschirmt ist. Nachfolgend werden die Erfindung und weitere Vorteile anhand von Ausführungsbeispielen erläutert, die in den Figuren der Zeichnung dargestellt sind. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
- Fig. 1: zeigt perspektivisch eine, insb. für Meßwertaufnehmer vom Coriolis-Typ geeignete, Magnetkreisanordnung,
- Fig. 2: zeigt die Magnetkreisanordnung gemäß Fig. 1 teilweise geschnitten in einer Vorderansicht,
- Fig. 3: zeigt perspektivisch die Magnetkreisanordnung gemäß Fig. 1, verwendet in einem Meßwertaufnehmer mit einer Doppelrohranordnung und
- Fig. 4 und 5: zeigen perspektivisch Ausgestaltungen der erfindungsgemäßen Magnetkreisanordnung, verwendet in einem Meßwertaufnehmer.

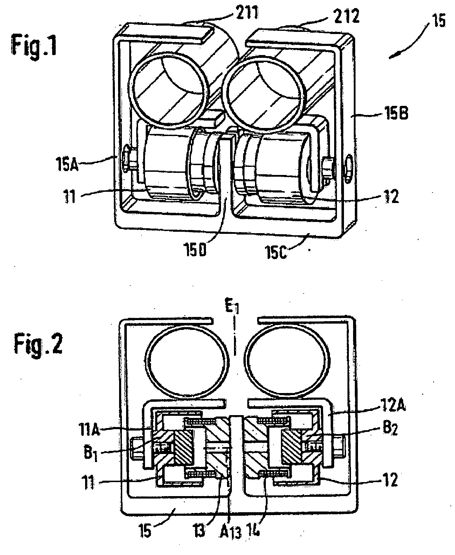

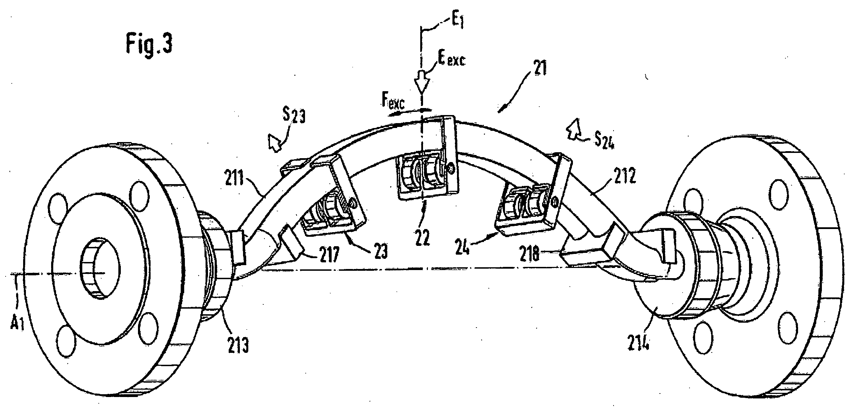

In den Fig. 1 bis 2 sind Ausführungsbeispiele einer, insb. für die Verwendung in einem Coriolis-Massedurchflußmesser oder auch in einem Coriolis-Massedurchfluß/Dichtemesser geeignete, Magnetkreisanordnung zum Wandeln elektrischer in mechanische Energie und/oder, basierend auf dem Induktionsgesetz, zum Wandeln mechanischer in elektrische Energie dargestellt. Ein entsprechendes Ausführungsbeispiel für einen solchen, hier auf einen Massedurchfluß m eines in einer nicht dargestellten Rohrleitung strömenden Fluids reagierenden, Meßwertaufnehmer vom Vibrations-Typ ist in der Fig. 3 gezeigt. Ein solcher Massedurchflußaufnehmer dient, als physikalisch-elektrischer Meßwandler in einem Coriolis-Massedurchflußmesser verwendet, bekanntlich dazu, im hindurchströmenden Fluid Corioliskräfte zu erzeugen sowie diese sensorisch zu erfassen und in elektronisch auswertbare Meßsignale umzuwandeln.

Zum Führen des zu messenden Fluids umfaßt der Meßwertaufnehmer eine Doppelrohranordnung 21 mit einem ersten Aufnehmerrohr 211 und einem, insb. zum Aufnehmerrohr 211 identisch geformten, zweiten Aufnehmerrohr 212. Die Aufnehmerrohre 211, 212 können, wie bei derartigen Meßwertaufnehmern üblich, einfach, z.B. U-förmig, oder schleifenförmig gekrümmt sein; falls, erforderlich, können sie aber auch gerade sein.

Die Aufnehmerrohre 211, 212 sind bevorzugt, wie auch in Fig. 3 dargestellt, zueinander so ausgerichtet, daß eine zwischen den beiden, insb. zueinander parallelen, Aufnehmerrohren 211, 212 imaginär verlaufende Mittelebene E₁ praktisch einer ersten Symmetrieebene der Doppelrohranordnung 21 entspricht. Ferner ist die Doppelrohranordnung 21 in vorteilhafter Weise so geformt, daß sie eine die Mittelebene E₁, in der ja auch oben genannte Hochachse liegt, insb. senkrecht, schneidende imaginäre zweite Symmetrieebene aufweist.

Jedes der beiden Aufnehmerrohre 211, 212 mündet einlaßseitig in ein Einlaßverteilerstück 213 und auslaßseitig in ein Auslaßverteilerstück 214. Eirilaßverteilerstück 213 und Auslaßverteilerstück 214 sind bei eingebautem Meßgerät jeweils mit einem geraden einlaßseitigen bzw. auslaßseitigen Abschnitt der Fluid führenden Rohrleitung verbunden und daher, wie bei derartigen Meßwertaufnehmern üblich, bevorzugt zueinander und zu einer die beiden imaginär verbindenden Längsachse A₁ der Doppelrohranordnung 21 fluchtend ausgerichtet. Für den Fall, daß der Meßwertaufnehmer lösbar in die Rohrleitung zu montieren ist, ist bevorzugt dem Einlaßverteilerstück 213 ein erster Flansch 215 und dem Auslaßverteilerstück 214 ein zweiter Flansch 216 angeformt; falls erforderlich können Einlaßverteilerstück 213 und Auslaßverteilerstück 214 aber auch direkt mit der Rohrleitung z.B. mittels Schweißung oder Hartlötung, verbunden werden.

Im Betrieb des Meßwertaufnehmers werden die Aufnehmerrohre 211, 212, wie bereits erwähnt, im Nutzmode zu Biegeschwingungen, insb. auf einer natürlichen Resonanzfrequenz eines Eigenmodes, angeregt, und zwar so, daß, wie bei derartigen Meßwertaufnehmern üblich, das Aufnehmerrohr 211 gegenphasig zum Aufnehmerrohr 212 vibriert. Die somit im hindurchströmenden Fluid induzierten Corioliskräfte bewirken bekanntlich eine, auch als Coriolismode bezeichnete, zusätzliche elastische Verformung des Aufnehmerrohrs 211 bzw. 212, die, den angeregten Schwingungen des Nutzmodes überlagert, auch vom zu messenden Massedurchfluß m abhängig ist.

Falls erforderlich, können allfällige, von den vibrierenden Aufnehmerrohren 211, 212 im Einlaßverteilerstück 213 und Auslaßverteilerstück 214 verursachte mechanische Spannungen z.B. dadurch minimiert werden, daß die Aufnehmerrohre 211, 212, wie bei derartigen Aufnehmern üblich, einlaßseitig mittels wenigstens einer ersten Knotenplatte 217 und auslaßseitig mittels wenigstens einer zweiten Knotenplatte 218 miteinander mechanisch verbunden sind.

Zum Antreiben der Aufnehmerrohre 211, 212 umfaßt der Meßwertaufnehmer mindestens einen Schwingungserreger 22. Dieser dient dazu, eine, von einer nichtdargestellten Steuer-Elektronik z.B. des oben genannten Massedurchflußmessers eingespeiste, elektrische Erregerenergie E_{exc} in solche, z.B. pulsierenden oder harmonischen, Erregerkräfte F_{exc} umzuwandeln, die symmetrisch, also gleichzeitig und gleichmäßig, jedoch gegensinnig, auf Aufnehmerrohr 211 und 212 einwirken und somit die zueinander gegenphasigen Schwingungen der Aufnehmerrohre 211, 212 erzeugen. Die Erregerkräfte F_{exc} können in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden, vgl. hierzu auch die US-A 48 01 897.

Zum Erfassen von Schwingungen der vibrierenden Aufnehmerrohre 211,212 weist der Meßwertaufnehmer ferner einen einlaßßseitigen ersten Schwingungssensor 23 und einen auslaßseitigen zweiten Schwingungssensor 24 auf, welche beiden Schwingungssensoren 23, 24 auf Bewegungen der Aufnehmerrohre 211, 212, insb. deren laterale Auslenkungen, reagierend, ein entsprechendes erstes bzw. zweites Schwingungssignal S₂₃, S₂₄ liefern.

Bei Meßwertaufnehmern der beschriebenen Art kann die erfindungsgemäße Magnetkreisanordnung z.B. als Schwingungserreger 22 verwendet, zum Erzeugen der die Aufnehmerrohre 211, 212 antreibenden Erregerkräfte F_{exc} dienen. Des weiteren kann die Magnetkreisanordnung, wie bereits erwähnt, dem Erfassen der Bewegungen der Aufnehmerrohre 211, 212 und zum Erzeugen der Schwingungssignale S₂₃ oder S₂₄ dienend, z.B. auch als Schwingungssensor 23 bzw. 24 verwendet werden.

Zum Umwandeln mechanischer bzw. elektrischer Energie weist die Magnetkreisanordnung wenigstens eine im Betrieb von einem Strom durchflossene erste, bevorzugt zylindrische, Spule 13 auf, die mittels einer Halterung 15 an der Doppelrohranordnung 21 befestigt ist. Bevorzugt ist neben der Spule 13 ferner, insb. mit dieser fluchtend, eine zweite Spule 14 an der Halterung 15 fixiert.

Des weiteren umfaßt die Magnetkreisanordnung einen am Aufnehmerrohr 211 fixierten, im Betrieb mit der stromdurchflossenen Spule 13 über ein erstes Magnetfeld B₁ in Wechselwirkung stehenden, ersten Anker 11. Außerdem ist am Aufnehmerrohr 212 ein, insb. zum Anker 11 identisch geformter, zweiter Anker 12 fixiert, der z.B. über ein zweites Magnetfeld B₂ mit der Spule 14 in Wechselwirkung stehen kann. Das Magnetfeld B₁ kann hier z.B. ein mittels der Spule 13 erzeugtes Wechselfeld, dem ggf. ein mittels des Ankers 11 erzeugtes Gleichfeld aufmoduliert ist; in analoger Weise kann das Magnetfeld B₂ z.B. mittels der Spule 14 und des Ankers 12 erzeugt werden.

Die beide Anker 11, 12 dienen ferner dazu, mittels der Magnetkreisanordnung erzeugte Magnetfelder, insb. das Magnetfeld B₁ und ggf. das Magnetfeld B₂, auch außerhalb der Spule 13, zu homogenisieren und so zu führen, daß diese auf einen möglichst engen räumlichen Bereich konzentriert sind, der sich im wesentlichen innerhalb der Magnetkreisanordnung selbst erstreckt. Ferner dienen die Anker 11, 12 auch dazu, vorgenannte Magnetfelder so zu formen und zu führen, daß sie auch in Luft eine möglichst hohe, insb. konstante, Flußdichte aufweisen. Die Anker 11, 12 bestehen daher bevorzugt zumindest anteilig aus ferromagnetischen Material, das bekanntlich eine sehr hohe magnetische Leitfähigkeit aufweist und somit eine Magnetfelder konzentrierende Wirkung besitzt.

Nach einer bevorzugten Ausgestaltung der Erfindung dient der Anker 11 auch zur Erzeugung eines permanenten Gleichanteils des Magnetfelds B₁ in analoger Weise wird mittels des Ankers 12 bevorzugt ein permanenter Gleichanteil des Magnetfelds B₂ erzeugt. Insbesondere für diesen Fall bestehen die Anker 11, 12 zumindest anteilig aus einem hartmagnetischen, also vormagnetisierbaren, Material, wie z.B. AINiCo, NyFeB, SmCo oder einer anderen Seltene-Erde-Legierung. Ferner kann als Material für diese Ausgestaltung der Anker 11, 12 aber auch erheblich kostengünstigerer Automatenstahl oder Baustahl verwendet werden.

Wie z.B in den Fig. 1 bis 2dargestellt, ist der Anker 11 mittels eines anmontierten, biegesteifen ersten Winkelstücks 11A am Aufnehmerrohr 211 und der Anker 12 mittels eines anmontierten, biegesteifen zweiten Winkelstücks 12A am Aufnehmerrohr 212 starr fixiert. Die Winkelstücke 11A, 12A können mit dem Aufnehmerrohr 211 bzw. 212 z.B. wiederum verschweißt oder hartverlötet sein.

Die Spule 13, ggf. auch die Spule 14, ist, wie z.B. in der Fig. 1 gezeigt, mittels der Halterung 15 an beiden Aufnehmerrohren 211, 212 angebracht, und zwar so, daß eine Symmtrieachse der Magnetkreisanordnung praktisch parallel zur Mittelebene E₁ der Doppelrohranordnung 21 liegt. Die Halterung 15 ist dazu bevorzugt mit einem ersten Schenkel 15A am Aufnehmerrohr 211 und mit einem im wesentlichen gleichgeformten zweiten Schenkel 15B am Aufnehmerrohr 212 fixiert. Des weiteren sind die beiden, insb. federelastischen, Schenkel 15A, 15B über eine Tragplatte 15C am der Doppelrohranordnung 21 jeweils abgewandten Ende, bevorzugt starr, miteinander verbunden. Die Halterung 15 kann sowohl einstückig, z.B. aus einem Stanz-Biegteil, oder mehrstückig hergestellt sein. Als Material für die Halterung 15 können z.B. dieselben Werkstoffe wie für die Aufnehmerrohre 211, 212 verwendet werden.

Für den Fall, daß die Aufnehmerrohre 211, 212 in der oben beschriebenen Weise zueinander gegenphasig vibrieren, wird die Halterung 15, insb. durch Ausbiegen der an den Aufnehmerrohren 211, 212 befestigten Schenkel 15A, 15B, zwar verformt, ihre Symmetrieachse behält jedoch ihre Lage bezüglich der Mittelebene E₁ im wesentlichen bei. Somit ist auch die von der Tragplatte 15C, z.B. mittels eines an diese angeformten Steg 15D, gehalterte Spule 13, praktisch schwimmend an der Doppelrohranordnung 21 befestigt und bezüglich der Mittelebene E₁ stets in einem im wesentlichen konstanten Abstand gehalten.

Um eine Beeinflussung der Schwingungsform der vibrierenden Aufnehmerrohre 211, 212 durch die Halterung 15 zu vermeiden, ist diese entsprechend biegeweich auszuführen. Dazu können z.B. die betriebsgemäß mitschwingenden Schenkel 15A, 15B aus entsprechend dünnen Blechstreifen gefertigt sein.

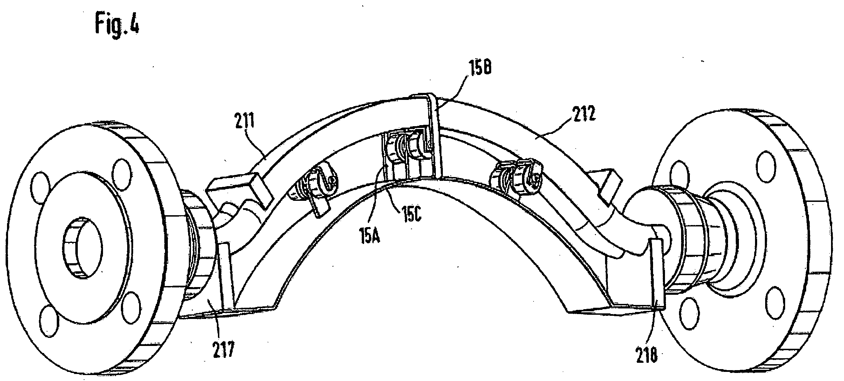

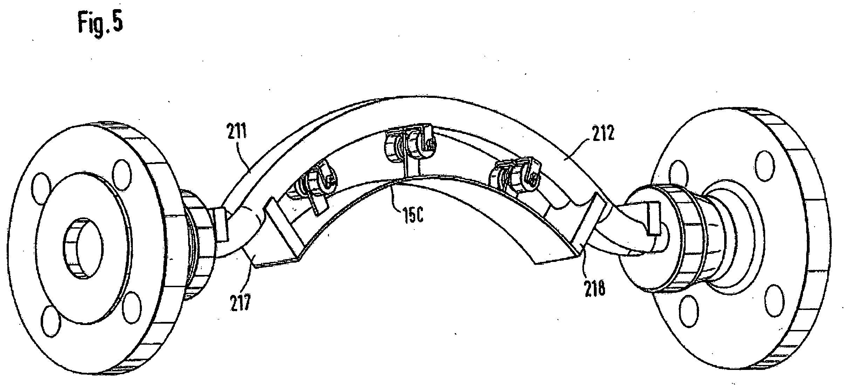

Nach einer weiteren bevorzugten Ausgestaltung der Erfindung ist die Tragplatte 15C, wie in der Fig. 4 oder 5 schematisch dargestellt, so ausgeformt und an den Aufnehmerrohren 211, 212 befestigt, daß sie sich, im wesentlichen parallel zu diesen verlaufend, praktisch entlang der gesamten Doppelrohranordnung 21 erstreckt. Die Trägerplatte 15C ist hierbei in vorteilhafter Weise einlaßseitig bzw. auslaßseitig direkt an der jeweiligen Knotenplatte 217 bzw. 218 befestigt. Es hat sich hier überraschenderweise gezeigt, daß bei parallel zur Mittelebene E₁ verlaufenden, z.B. thermisch bedingten, Ausdehnungen der Aufnehmerrohren 211, 212, die so fixierte Halterung 15 diesen Ausdehnungen soweit folgen kann, daß eine allfällige, relative Verschiebung zwischen Halterung 15 und Doppelrohranordnung 21 von vernachlässigbar geringem Ausmaß ist.

Ein besonderer Vorteil dieser Ausgestaltung der Erfindung ist darin zu sehen, daß auf eine dann zusätzliche Fixierung der Halterung 15 an der Doppelrohranordnung 21 via Schenkel 15A, 15B vollständig verzichtet werden kann, vgl. Fig. 5.

Die erfindungsgemäße Magnetkreisanordnung vom elektrodynamischen Typ, also eine solche Magnetkreisanordnung, bei der ein zu einer Leiterschleife geformter elektrischer Leiter, z.B. die Spule 13, von einem mittels wenigstens einem Dauermagneten erzeugten Magnetfeld, insb. senkrecht, durchsetzt ist und bei der Leiterschleife und Dauermagnet relativ zueinander bewegt werden. Dazu ist an der Doppelrohranordnung 21 mittels der Halterung 15 die Spule 13 bevorzugt so angebracht, daß sie mit einer Spulenmittelachse A₁₃ im wesentlichen senkrecht zur Mittelebene E₁ ausgerichtet ist.

Zum Homogenisieren des Magnetfelds B₁ bzw. B₂ und zum Einstellen einer insb. auch außerhalb der Anker 11, 12, möglichst hohen Flußdichte ist jeder der beiden Anker 11, 12, wie in den Fig. 1 und 2 eher schematisch dargestellt, inform eines Bechers ausgeführt, dessen jeweiligem Becherboden ein zur jeweiligen Becherwand koaxial ausgerichteter, insb. auch hartmagnetischer, Stab angeformt ist.

Nach einer bevorzugten Ausgestaltung der Erfindung sind die Anker 11, 12, wie bei derartigen Magnetkreisanordnungen üblich, bevorzugt zumindest anteilig, z.B. im Bereich der oben erwähnten Becherwand, aus weichmagnetischen Werkstoffen, z.B. Ferrit oder Corovac, gefertigt.

## Patentansprüche

1. Meßwertaufnehmer vom Vibrations-Typ, umfassend:
- eine Doppelrohranordnung (21) mit einem ersten vibrierenden Aufnehmerrohr (211) und einem, insb. zum ersten Aufnehmerrohr (211) identisch geformten, zweiten vibrierenden Aufnehmerrohr (212),
-- wobei die, insb. zueinander parallelen, Aufnehmerrohre (211, 212) zueinander so ausgerichtet sind, daß eine zwischen den beiden Aufnehmerrohren (211, 212) imaginär verlaufende Mittelebene (E₁) einer ersten Symmetrieebene der Doppelrohranordnung (21) entspricht,
- sowie eine Magnetkreisanordnung zum Wandeln elektrischer in mechanischer Energie und/oder umgekehrt,
- wobei die Magnetkreisanordnung
-- wenigstens eine im Betrieb von einem Strom durchflossene erste Spule (13),
-- einen am ersten Aufnehmerrohr (211) fixierten, ersten Anker (11) und einen am zweiten Aufnehmerrohr (212) fixierten, zweiten Anker (12), sowie
-- eine am ersten und zweiten Aufnehmerrohr (211, 212) fixierte Halterung (15) für die Spule (13) aufweist,
-- wobei die Halterung (15) eine Tragplatte (15C) aufweist, die, sich entlang der Doppelrohranordnung (21) erstreckend, einlaßseitig und auslaßseitig jeweils am ersten und zweiten Aufnehmerrohr (211, 212) fixiert ist,
- wobei die erste Spule (13) mittels eines an die Tragplatte (15C) angeformten Stegs (15D) von der Tragplatte (15C) gehaltert ist,
-- wobei die Spule (13) mittels der Halterung (15) so an der Doppelrohranordnung (21) angebracht ist, daß die Spule (13) mit einer Spulenmittelachse (A₁₃) im wesentlichen senkrecht zur Mittelebene (E₁) ausgerichtet ist,
-- wobei die beiden Anker (11, 12) zumindest anteilig aus ferromagnetischen Material bestehen und jeder der beiden Anker (11, 12) inform eines Bechers ausgeführt ist, dessen jeweiligem Becherboden ein zur jeweiligen Becherwand koaxial ausgerichteter, insb. hartmagnetischer, Stab angeformt ist,
-- wobei die beiden Anker (11, 12) so geformt und so zueinander ausgerichtet sind, daß sich mittels der Magnetkreisanordnung erzeugte Magnetfelder im wesentlichen konzentriert innerhalb derselben ausbreiten, und
-- wobei die erste Spule (13) und wenigstens der erste Anker (11) über ein erstes Magnetfeld miteinander in Wechselwirkung stehen.

2. Meßwertaufnehmer vom Vibrations-Typ, umfassend:
- eine Doppelrohranordnung (21) mit einem ersten vibrierenden Aufnehmerrohr (211) und einem, insb. zum ersten Aufnehmerrohr (211) identisch geformten, zweiten vibrierenden Aufnehmerrohr (212),
-- wobei die, insb. zueinander parallelen, Aufnehmerrohre (211, 212) zueinander so ausgerichtet sind, daß eine zwischen den beiden Aufnehmerrohren (211, 212) imaginär verlaufende Mittelebene (E₁) einer ersten Symmetrieebene der Doppelrohranordnung (21) entspricht,
- sowie eine Magnetkreisanordnung zum Wandeln elektrischer in mechanischer Energie und/oder umgekehrt
- wobei die Magnetkreisanordnung
-- wenigstens eine im Betrieb von einem Strom durchflossene erste Spule (13),
-- einen am ersten Aufnehmerrohr (211) fixierten, ersten Anker (11) und einen am zweiten Aufnehmerrohr (212) fixierten, zweiten Anker (12), sowie
- eine am ersten und zweiten Aufnehmerrohr (211, 212) fixierte Halterung (15) für die Spule (13) aufweist,
-- wobei die Halterung (15) mit einem ersten Schenkel (15A) am ersten Aufnehmerrohr (211) und mit einem, insb. zum ersten Schenkel (15A) gleichgeformten, zweiten Schenkel (15B) am Aufnehmerrohr (212) fixiert ist, welche beiden, insb. federelastischen, Schenkel (15A, 15B) über eine Tragplatte (15C) am der Doppelrohranordnung (21) jeweils abgewandten Ende, insb. starr, miteinander verbunden sind,
-- wobei die Spule (13) mittels der Halterung (15) so an der Doppelrohranordnung (21) angebracht ist, daß die Spule (13) mit einer Spulenmittelachse (A₁₃) im wesentlichen senkrecht zur Mittelebene (E₁) ausgerichtet ist,
-- wobei die beiden Anker (11, 12) zumindest anteilig aus ferromagnetischen Material bestehen und jeder der beiden Anker (11, 12) inform eines Bechers ausgeführt ist, dessen jeweiligem Becherboden ein zur jeweiligen Becherwand koaxial ausgerichteter, insb. hartmagnetischer, Stab angeformt ist,
-- wobei die beiden Anker (11, 12) so geformt und so zueinander ausgerichtet sind, daß sich mittels der Magnetkreisanordnung erzeugte Magnetfelder im wesentlichen konzentriert innerhalb derselben ausbreiten, und
-- wobei die erste Spule (13) und wenigstens der erste Anker (11) über ein erstes Magnetfeld miteinander in Wechselwirkung stehen.

3. Meßwertaufnehmer nach Anspruch 1 oder 2,
- wobei die Magnetkreisanordnung eine, insb. mit der ersten Spule fluchtend, an der Halterung (15) fixierte, im Betrieb von einem Strom durchflossene zweite Spule (14) umfaßt, und
- wobei die zweite Spule (14) und der zweite Anker (12) über ein zweites Magnetfeld miteinander in Wechselwirkung stehen.

4. Meßwertaufnehmer nach einem der vorherigen Ansprüche, wobei wenigstens der erste Anker (11) so geformt und so zur ersten Spule (13) ausgerichtet ist, daß sich das erste Magnetfeld zumindest seitlich neben der Spule (13) und, mit einer imaginären Spulenmittelachse (A₁₃) im wesentlichen fluchtend, homogenisiert ausbreitet.

5. Meßwertaufnehmer nach einem der vorherigen Ansprüche, wobei die Spule (13) mittels der Halterung (15) an beiden Aufnehmerrohren (211, 212) so angebracht ist, daß eine Symmetrieachse der Magnetkreisanordnung parallel zur Mittelebene (E₁) der Doppelrohranordnung (21) liegt.

6. Meßwertaufnehmer nach einem der vorherigen Ansprüche, wobei die Aufnehmerrohre (211, 212) U-förmig oder schleifenförmig gekrümmt sind.

7. Meßwertaufnehmer nach einem der vorherigen Ansprüche, wobei die Aufnehmerrohre (211, 212) gerade sind.

8. Meßwertaufnehmer nach einem der Ansprüche 2 bis 7, wobei die Tragplatte (15C), sich entlang der Doppelrohranordnung (21) erstreckend, einlaßseitig und auslaßseitig jeweils am ersten und zweiten Aufnehmerrohr (211, 212) fixiert ist.

9. Meßwertaufnehmer nach einem der vorherigen Ansprüche, wobei der Meßwertaufnehmer ein Coriolis-Massedurchflußaufnehmer ist.

10. Meßwertaufnehmer nach einem der vorherigen Ansprüche, wobei die Magnetkreisanordnung als ein die Aufnehmerrohre (211, 212) antreibender Schwingungserreger (22) des Meßwertaufnehmers verwendet ist.

11. Meßwertaufnehmer nach einem der vorherigen Ansprüche, wobei die Magnetkreisanordnung als ein Schwingungen der Aufnehmerrohre (211, 212) erfassender Schwingungssensor (23) des Meßwertaufnehmers verwendet ist.

12. Meßwertaufnehmer nach einem der Ansprüche 2 bis 11, wobei die erste Spule (13) mittels eines an die Tragplatte (15C) angeformten Stegs (15D) von der Tragplatte (15C) gehaltert ist.

13. Meßwertaufnehmer nach einem der vorherigen Ansprüche, wobei die Aufnehmerrohre (211, 212) zu Biegeschwingungen, insb. auf einer natürlichen Resonanzfrequenz eines Eigenmodes, angeregt, derart, daß das erste Aufnehmerrohr (211) gegenphasig zum zweiten Aufnehmerrohr (212) vibriert.

14. Meßwertaufnehmer nach Anspruch 2 oder einem davon abhängigen Anspruch,
- wobei die Aufnehmerrohre (211, 212) zu Biegeschwingungen, insb. auf einer natürlichen Resonanzfrequenz eines Eigenmodes, angeregt, derart, daß das erste Aufnehmerrohr (211) gegenphasig zum zweiten Aufnehmerrohr (212) vibriert, und
- wobei die Halterung (15), insb. durch Ausbiegen der an den Aufnehmerrohren (211, 212) befestigten Schenkel (15A, 15B), verformt ist, derart, daß die Symmetrieachse Halterung (15) ihre Lage bezüglich der Mittelebene (E₁) im wesentlichen bei behält.

## Claims

1. Vibronic-type sensor, comprising:
- a double tube arrangement (21) with a first vibrating sensor tube (211) and a second vibrating sensor tube (212), particularly one that is identical in shape to the first sensor tube (211),
-- wherein the sensor tubes (211,212), which are in particular parallel to one another, are aligned with one another in such a way that an imaginary median plane (E₁) running between the two sensor tubes (211, 212) corresponds to a first plane of symmetry of the double tube arrangement (21).
- as well as a magnetic circuit arrangement to convert electrical energy into mechanical energy and/or vice versa,
- wherein the magnetic circuit arrangement has
-- at least a first coil (13) through which a current flows during operation,
-- a first armature (11) fixed on the first sensor pipe (211) and a second armature (12) fixed on the second sensor pipe (212), as well as
-- a support (15) for the coil (13) fixed on the first and second sensor tube (211, 212),
-- wherein the support (15) has a support plate (15C), which extends along the double tube arrangement (21) and is fixed at the inlet and outlet side on the first and second sensor tube respectively (211, 212),
-- wherein the first coil (13) is supported by the support plate (15C) via a bridge (15D) shaped into the support plate (15C),
-- wherein the coil (13) is fitted by the support (15) on the double tube arrangement (21) in such a way that the coil (13) with a coil middle axis (A₁₃) is essentially aligned perpendicularly to the median plane (E₁),
-- wherein the two armatures (11, 12) are at least partially made from a ferromagnetic material and each of the two armatures (11, 12) is realized in the form of a cup, a rod, particularly a magnetically hard rod, being formed on the base of the cup and being coaxially aligned in relation to the individual cup wall,
-- wherein the two armatures (11, 12) are shaped and aligned with one another in such a way that magnetic fields generated by means of the magnetic circuit arrangement essentially extend in a concentrated manner within said circuit arrangement, and
-- wherein the first coil (13) and at least the first armature (11) interact with one another via a first magnetic field.

2. Vibronic-type sensor, comprising:
- a double tube arrangement (21) with a first vibrating sensor tube (211) and a second vibrating sensor tube (212), particularly one that is identical in shape to the first sensor tube (211),
-- wherein the sensor tubes (211, 212), which are in particular parallel to one another, are aligned with one another in such a way that an imaginary median plane (E₁) running between the two sensor tubes (211, 212) corresponds to a first plane of symmetry of the double tube arrangement (21).
- as well as a magnetic circuit arrangement to convert electrical energy into mechanical energy and/or vice versa,
- wherein the magnetic circuit arrangement has
-- at least a first coil (13) through which a current flows during operation,
-- a first armature (11) fixed on the first sensor pipe (211) and a second armature (12) fixed on the second sensor pipe (212), as well as
-- a support (15) for the coil (13) fixed on the first and second sensor tube (211, 212),
-- wherein the support (15) is fixed to the first sensor tube (211) by a first side (15A) and to the sensor tube (212) by a second side (15B), particularly one whose shape is identical to the first side (15A), wherein both of these, notably spring-elastic, sides (15A, 15B), are interconnected, particularly in a rigid manner, via a support plate (15C) at the end facing away from the double tube arrangement (21),
-- wherein the coil (13) is fitted by the support (15) on the double tube arrangement (21) in such a way that the coil (13) with a coil middle axis (A₁₃) is essentially aligned perpendicularly to the median plane (E₁),
-- wherein the two armatures (11, 12) are at least partially made from a ferromagnetic material and each of the two armatures (11, 12) is realized in the form of a cup, a rod, particularly a magnetically hard rod, being formed on the base of the cup and being coaxially aligned in relation to the individual cup wall,
-- wherein the two armatures (11, 12) are shaped and aligned with one another in such a way that magnetic fields generated by means of the magnetic circuit arrangement essentially extend in a concentrated manner within the said circuit arrangement, and
-- wherein the first coil (13) and at least the first armature (11) interact with one another via a first magnetic field.

3. Sensor as claimed in Claim 1 or 2,
- wherein the magnetic circuit arrangement comprises a second coil (14) particularly one that is flush with the first coil, said second coil being fixed on the support (15) and through said second coil current flows during operation, and
- wherein the second coil (14) and the second armature (12) interact with one another via a second magnetic field.

4. Sensor as claimed in one of the previous claims, wherein at least the first armature (11) is shaped and aligned with the first coil (13) in such a way that the first magnetic field extends in a homogeneous manner at least laterally beside the coil (13), and essentially aligned with an imaginary coil middle axis (A₁₃).

5. Sensor as claimed in one of the previous claims, wherein the coil (13) is fixed on both sensor tubes (211, 212) by means of the support in such a way that an axis of symmetry of the magnetic circuit arrangement is parallel to the median plane (E₁) of the double tube arrangement (21).

6. Sensor as claimed in one of the previous claims, wherein the sensor tubes (211, 212) are bent in the form of a U or a loop.

7. Sensor as claimed in one of the previous claims, wherein the sensor tubes (211, 212) are straight.

8. Sensor as claimed in one of the Claims 2 to 7, wherein the support plate (15C) which extends along the double tube arrangement (21), is fixed at the inlet and outlet side on the first and second sensor tube (211, 212) respectively.

9. Sensor as claimed in one of the previous claims, wherein the sensor is a Coriolis mass flow sensor.

10. Sensor as claimed in one of the previous claims, wherein the magnetic circuit arrangement is used as a vibration exciter (22) of the sensor, causing the sensor tubes (211, 212) to vibrate.

11. Sensor as claimed in one of the previous claims, wherein the magnetic circuit arrangement is used as a vibration sensing element (23) of the measuring sensor, said vibration sensor recording the vibrations of the sensor tubes (211, 212).

12. Sensor as claimed in one of the Claims 2 to 11, wherein the first coil (13) is supported by the support plate (15C) by means of a bridge (15D) shaped into the support plate (15C).

13. Sensor as claimed in one of the previous claims, wherein the sensor tubes (211, 212) are excited to flexural vibrations, particularly at a natural resonance frequency of an eigenmode, in such a way that the first sensor tube (211) vibrates in anti-phase with the second sensor tube (212).

14. Sensor as claimed in Claim 2 or a dependent claim,
- wherein the sensor tubes (211, 212) are excited to flexural vibrations, particularly at a natural resonance frequency of an eigenmode, in such a way that the first sensor tube (211) vibrates in anti-phase with the second sensor tube (212), and
- wherein the support (15) is deformed, particularly by the bending out of the sides (15A, 15B) secured on the sensor tubes (211, 212), in such a way that the axis of symmetry of the support (15) essentially maintains its position in relation to the median plane (E₁).

## Revendications

1. Capteur de mesure du type à vibrations, comprenant :
- une configuration à double tube (21) avec un premier tube de capteur vibrant (211) et un deuxième tube de capteur vibrant (212), notamment formé de façon identique au premier tube de capteur (211),
-- pour lequel les tubes de capteur (211, 212), notamment parallèles, sont alignés de telle manière qu'un plan médian imaginaire (E₁) entre les deux tubes de capteur (211, 212) correspond à un premier plan de symétrie de la configuration à double tube (21).
- ainsi qu'un ensemble circuit magnétique destiné à la conversion électrique en énergie mécanique et/ou réciproquement,
- pour lequel l'ensemble circuit magnétique comporte
-- au moins une première bobine (13) parcourue, en fonctionnement, par un courant,
-- une première armature (11) fixée sur le premier tube de capteur (211) et une deuxième armature (12) fixée sur le deuxième tube de capteur (212), ainsi que
-- un support (15) fixé sur le premier et le deuxième tube de capteur (211, 212) pour la bobine (13),
-- pour lequel le support (15) comporte une plaque support (15C), qui s'étend le long de la configuration à double tube (21) et est fixée, côté entrée et côté sortie, respectivement sur le premier et le deuxième tube de capteur (211, 212),
-- pour lequel la première bobine (13) est supportée au moyen d'une nervure (15D) moulée sur la plaque support (15C),
-- pour lequel la bobine (13) est fixée au moyen du support (15) sur la configuration à double tube (21) de telle sorte que la bobine (13) soit orientée avec un axe médian de bobine (A₁₃) pour l'essentiel perpendiculaire au plan médian (E₁),
-- pour lequel les deux armatures (11, 12) sont constituées au moins partiellement d'un matériau ferromagnétique et chacune des deux armatures (11, 12) est exécutée en forme d'un gobelet, une tige, notamment magnétique dure, étant formée sur chaque fond de gobelet avec un alignement coaxial par rapport à la paroi de gobelet respective,
-- pour lequel les deux armatures sont formées et alignées l'une par rapport à l'autre de telle sorte que les champs magnétiques générés au moyen de l'ensemble circuit magnétique s'étendent pour l'essentiel de façon concentrée au sein de ce même ensemble circuit, et
-- pour lequel la première bobine (13) et au moins la première armature (11) sont en interaction par l'intermédiaire d'un premier champ magnétique.

2. Capteur de mesure du type à vibrations, comprenant :
- une configuration à double tube (21) avec un premier tube de capteur vibrant (211) et un deuxième tube de capteur vibrant (212), notamment formé de façon identique au premier tube de capteur (211),
-- pour lequel les tubes de capteur (211, 212), notamment parallèles, sont alignés de telle manière qu'un plan médian imaginaire (E₁) entre les deux tubes de capteur (211, 212) correspond à un premier plan de symétrie de la configuration à double tube (21).
- ainsi qu'un ensemble circuit magnétique destiné à la conversion électrique en énergie mécanique et/ou réciproquement,
- pour lequel l'ensemble circuit magnétique comporte
-- au moins une première bobine (13) parcourue, en fonctionnement, par un courant,
-- une première armature (11) fixée sur le premier tube de capteur (211) et une deuxième armature (12) fixée sur le deuxième tube de capteur (212), ainsi que
-- un support (15) fixé sur le premier et le deuxième tube de capteur (211, 212) pour la bobine (13),
-- pour lequel le support (15) est fixé avec un premier côté (15A) sur le premier tube de capteur (211) et avec un deuxième côté (15B), notamment formé de façon identique au premier côté (15A), lesquels deux côtés (15A, 15B), ayant notamment l'élasticité d'un ressort, sont reliés entre eux, notamment de façon rigide, par l'intermédiaire d'une plaque support (15C) aux extrémités opposées à la configuration à double tube (21),
-- pour lequel la bobine (13) est fixée au moyen du support (15) sur la configuration à double tube (21) de telle sorte que la bobine (13) soit orientée avec un axe médian de bobine (A₁₃) pour l'essentiel perpendiculaire au plan médian (E₁),
-- pour lequel les deux armatures (11, 12) sont constituées au moins partiellement d'un matériau ferromagnétique et chacune des deux armatures (11, 12) est exécutée en forme d'un gobelet, une tige, notamment magnétique dure, étant formée sur chaque fond de gobelet avec un alignement coaxial par rapport à la paroi de gobelet respective,
-- pour lequel les deux armatures sont formées et alignées l'une par rapport à l'autre de telle sorte que les champs magnétiques générés au moyen de l'ensemble circuit magnétique s'étendent pour l'essentiel de façon concentrée au sein de ce même ensemble circuit, et
-- pour lequel la première bobine (13) et au moins la première armature (11) sont en interaction par l'intermédiaire d'un premier champ magnétique.

3. Capteur de mesure selon la revendication 1 ou 2,
- pour lequel l'ensemble circuit magnétique comprend une deuxième bobine (14) parcourue en fonctionnement par un courant, fixée sur le support (15) de façon affleurante à la première bobine, et
- pour lequel la deuxième bobine (14) et la deuxième armature (12) sont en interaction par l'intermédiaire d'un deuxième champ magnétique.

4. Capteur de mesure selon l'une des revendications précédentes, pour lequel au moins la première armature (11) est formée et orientée par rapport à la première bobine (13) telle sorte que le premier champ magnétique s'étend de façon homogène au moins latéralement, à côté de la bobine (13), et pour l'essentiel de façon alignée avec l'axe médian imaginaire (A₁₃) de la bobine.

5. Capteur de mesure selon l'une des revendications précédentes, pour lequel la bobine (13) est fixée au moyen du support (15) sur les deux tubes de capteur (211, 212) de telle sorte qu'un plan de symétrie de l'ensemble circuit magnétique est parallèle au plan médian (E₁) de la configuration à double tube (21).

6. Capteur de mesure selon l'une des revendications précédentes, pour lequel les tubes de capteur (211, 212) sont coudés en forme de U ou de boucle.

7. Capteur de mesure selon l'une des revendications précédentes, pour lequel les tubes de capteur (211, 212) sont droits.

8. Capteur de mesure selon la revendication 2 à 7, pour lequel la plaque support (15C) s'étend le long de la configuration à double tube (21) est et fixée, côté entrée et côté sortie, respectivement sur le premier et le deuxième tube de capteur (211, 212).

9. Capteur de mesure selon l'une des revendications précédentes, pour lequel le capteur de mesure est un débitmètre massique Coriolis.

10. Capteur de mesure selon l'une des revendications précédentes, pour lequel l'ensemble circuit magnétique est utilisé comme excitateur de vibrations (22) du capteur de mesure, excitant en vibrations les tubes de capteur (211, 212).

11. Capteur de mesure selon l'une des revendications précédentes, pour lequel l'ensemble circuit magnétique est utilisé en tant que détecteur de vibrations (23) du capteur de mesure, lequel détecteur détecte les vibrations des tubes de capteur (211, 212).

12. Capteur de mesure selon l'une des revendications 2 à 11, pour lequel la première bobine (13) est supportée par la plaque support (15C) au moyen d'une nervure (15D) moulée sur la plaque support (15C).

13. Capteur de mesure selon l'une des revendications précédentes, pour lequel les capteurs de mesure (211, 212) sont excités en vibrations de flexion, notamment à partir d'une fréquence de résonance naturelle d'un mode propre, de telle sorte que le premier tube de capteur (211) vibre en opposition de phase avec le deuxième tube de capteur (212).

14. Capteur de mesure selon la revendication 2 ou l'une des revendications dépendantes
- pour lequel les tubes de capteur (211, 212) sont excités en vibrations de flexion, notamment à partir d'une fréquence de résonance naturelle d'un mode propre, de telle sorte que le premier tube de capteur (211) vibre en opposition de phase avec le deuxième tube de capteur (212), et
- pour lequel le support (15) est déformé notamment par le pliage des côtés (15A, 15B) fixés sur les tubes de capteur (211, 212), de telle sorte que le support symétrique (15) conserve pour l'essentiel sa position par rapport au plan médian (E₁).
